# EUROPÄISCHE PATENTSCHRIFT

(11) **EP 2 280 816 B1**
(45) Veröffentlichungstag und Bekanntmachung des Hinweises auf die Patenterteilung: **30.10.2013**
(21) Anmeldenummer: 10716760.3
(22) Anmeldetag: 01.04.2010
(51) Int. Cl.: B23K 26/03, B23K 26/12, B23K 26/14, B23K 26/34, B23K 26/42, B29C 67/00, B23K 26/04, B23K 26/08

(54) **VERFAHREN UND VORRICHTUNG ZUM KALIBRIEREN EINER BESTRAHLUNGSVORRICHTUNG**
METHOD AND DEVICE FOR CALIBRATING AN IRRADIATION DEVICE
PROCÉDÉ ET DISPOSITIF D'ÉTALONNAGE D'UN DISPOSITIF D'IRRADIATION

(30) Priorität: 06.04.2009 DE 102009016585
(43) Veröffentlichungstag der Anmeldung: 09.02.2011
(73) Patentinhaber: EOS GmbH Electro Optical Systems, 82152 Krailling (DE)
(72) Erfinder: PHILIPPI, Jochen, 82166 Gräfelfing (DE)
(74) Vertreter: Prüfer & Partner GbR European Patent Attorneys
(86) Internationale Anmeldenummer: PCT/EP2010/002121
(87) Internationale Veröffentlichungsnummer: WO 2010/115588

(56) Entgegenhaltungen:
- WO-A1-2009/026520
- DE-A1- 10 335 303
- US-A- 5 133 987

## Beschreibung

Die vorliegende Erfindung bezieht sich auf ein Verfahren und auf eine Vorrichtung zum Kalibrieren einer Bestrahlungsvorrichtung einer Anlage zum generativen Herstellen eines dreidimensionalen Objekts.

EP-1 048 441 A1 beschreibt ein Verfahren zum Kalibrieren einer Bestrahlungsvorrichtung einer Anlage zum generativen Herstellen eines dreidimensionalen Objekts, wobei die Anlage ein pulverförmiges Baumaterial auf einen Träger der Anlage oder einer zuvor aufgetragenen Schicht schichtweise aufträgt, wobei die aufgetragene Schicht eine Arbeitsebene definiert, und das Baumaterial durch die Bestrahlungsvorrichtung mit energiehaltiger Strahlung an Stellen bestrahlt, die dem Objekt entsprechen, um das Baumaterial an diesen Stellen zu verfestigen. Der Träger definiert ein relativ zu der Vorrichtung unveränderliches maschinenbezogenes Koordinatensystem. Beim Kalibrieren werden erfassbare Referenzmerkmale auf dem Träger bereitgestellt, aus denen das maschinenbezogene Koordinatensystem berechnet wird. Die energiehaltige Strahlung wird zu vorgegebenen Soll-Positionen in dem maschinenbezogenen Koordinatensystem abgelenkt, und eine Abweichung der Ist-Positionen des Auftreffpunktes der energiehaltigen Strahlung von den Soll-Positionen wird unter Verwendung der Referenzmerkmale erfasst. Die Bestrahlungsvorrichtung wird dann in Abhängigkeit von der Abweichung kalibriert. Die Ist-Positionen des Auftreffpunktes werden hierbei unter Verwendung eines lichtempfindlichen Mediums wie zum Beispiel einer Thermofolie und eines Scanners ermittelt.

EP-0 792 481 B1 und WO 94/15265 beschreiben jeweils ein Kalibrierverfahren, die ebenfalls ein lichtempfindliches Medium verwenden. US-5,123,734 A beschreibt ein Kalibrierverfahren für eine Stereolithografieanlage, wobei mehrere Sensoren zur Kalibrierung verwendet werden.

US 5,133,987 offenbart ein Stereolithografiegerät und - verfahren. Dort wird eine Kalibrierplatte zum Kalibrieren eines UV-Laserstrahls verwendet. Die Kalibrierplatte weist eine metallische Beschichtung auf einem Substrat auf, in der ein Lochmuster geätzt ist. Die Beschichtung kann UV-Licht abhalten, welches vom UV-Laser ausgesendet wird. Innerhalb der Kalibrierplatte und unterhalb des Substrats sind Photodioden angeordnet, die das UV-Licht direkt detektieren können.

Es ist die Aufgabe der vorliegenden Erfindung, ein Verfahren und eine Vorrichtung zum Kalibrieren einer Bestrahlungsvorrichtung einer Anlage zum generativen Herstellen eines dreidimensionalen Objekts vorzusehen, die das Kalibrieren vollautomatisch, kostengünstiger und genauer durchführen können.

Diese Aufgabe wird durch das Verfahren zum Kalibrieren einer Bestrahlungsvorrichtung einer Anlage zum generativen Herstellen eines dreidimensionalen Objekts mit den Merkmalen des Anspruchs 1 und durch eine entsprechende Vorrichtung mit den Merkmalen des Anspruchs 10 gelöst. Vorteilhafte Weiterbildungen sind Gegenstand der Unteransprüche.

In vorteilhafter Weise ist eine vollautomatische Kalibrierung über die gesamte Arbeitsebene möglich. Außerdem ist weder ein lichtempfindliches Medium noch ein Scanner erforderlich, und der gesamte Kalibriervorgang findet innerhalb der Anlage statt. Die Verwendung der Bildwandlerplatte, die das Laserlicht in detektierbares Licht umwandelt, ist besonders kostengünstig, da keine Anordnung mit vielen Sensoren erforderlich ist. Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts;
- Fig. 2: eine schematische Ansicht eines Verfahrens und einer Vorrichtung zum Kalibrieren einer Bestrahlungsvorrichtung gemäß einem Ausführungsbeispiel der vorliegenden Erfindung; und
- Fig. 3: eine schematische Ansicht einer Bildwandlerplatte gemäß dem Ausführungsbeispiel der vorliegenden Erfindung.

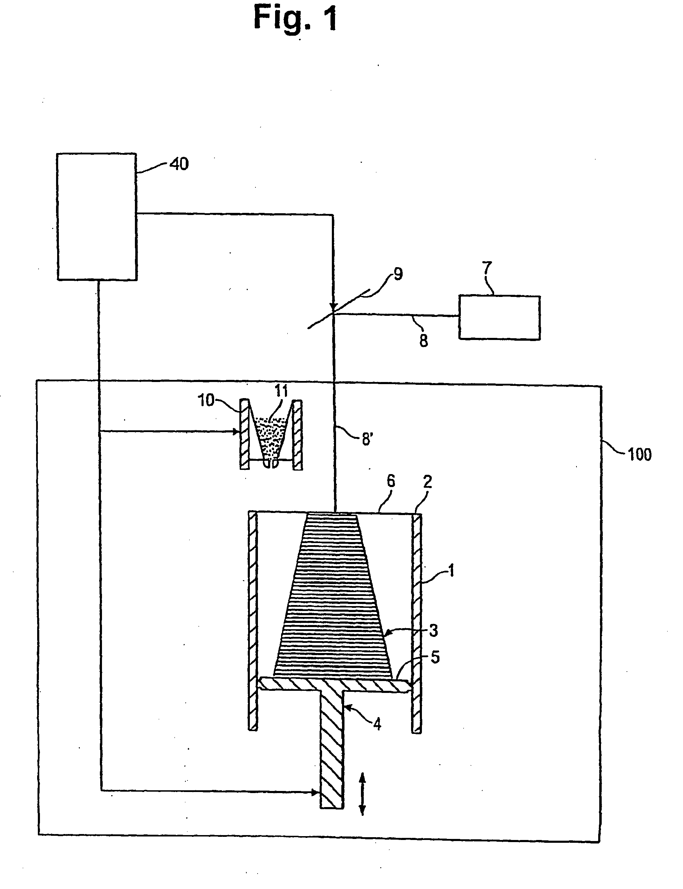

Die Fig. 1 zeigt eine schematische Ansicht einer Anlage zum Herstellen eines dreidimensionalen Objekts 3, die im Ausführungsbeispiel als Lasersinteranlage ausgebildet ist.

Die Lasersinteranlage weist einen nach oben hin offenen Rahmen 1 mit einem darin befindlichen, in vertikaler Richtung bewegbaren Träger 5 auf, der das herzustellende dreidimensionale Objekt 3 trägt. Der Träger 5 definiert eine Baufläche der Lasersinteranlage. Der Rahmen 1 und der Träger 5 definieren im Inneren einen Bauraum. Gegebenenfalls bilden der Rahmen 1 und der Träger 5 einen austauschbaren Wechselrahmen, der der Lasersinteranlage entnommen werden kann. Der Träger 5 ist mit einer Hubmechanik 4 in Verbindung, die ihn in vertikaler Richtung so verfährt, dass die jeweils zu verfestigende Schicht des Objekts 3 in einer Arbeitsebene 6 liegt.

Des Weiteren ist ein Beschichter 10 zum Aufbringen einer Schicht eines pulverförmigen Baumaterials 11 vorgesehen. Als pulverförmiges Baumaterial 11 können alle lasersinterbaren Pulver verwendet werden, wie zum Beispiel lasersinterbare Kunststoffe wie Polyamid, Polystyrol, und insbesondere Hochtemperatur-Kunststoffe wie PEEK, Metalle, Keramiken, Formsand und Verbundmaterialien. Als metallhaltiges, pulverförmiges Baumaterial 11 kommen beliebige Metalle und deren Legierungen sowie Mischungen mit metallischen Komponenten oder mit nichtmetallischen Komponenten in Frage. Dem Rahmen 1 wird zunächst das pulverförmige Baumaterial 11 aus einem Vorratsbehälter des Beschichters 10 zugeführt. Der Beschichter 10 wird danach in einer vorbestimmten Höhe über einen oberen Rand 2 des Rahmens 1 in der Arbeitsebene 6 verfahren, so dass die Schicht des pulverförmigen Baumaterials 11 mit einer definierten Höhe über der zuletzt verfestigten Schicht liegt. Die Lasersinteranlage weist des Weiteren eine Strahlungsquelle 7 auf, die eine energiehaltige Strahlung 8' erzeugt. In diesem Ausführungsbeispiel ist die Strahlungsquelle 7 ein Laser 7. Der Laser 7 erzeugt energiehaltige Strahlung 8, 8' in Gestalt eines Laserstrahls 8, 8', der durch eine Umlenkvorrichtung 9 auf beliebige Punkte in der Arbeitsebene 6 fokussiert wird. Die Umlenkvorrichtung 9 ist durch einen drehbaren Spiegel verwirklicht, der durch eine Stellvorrichtung wie zum Beispiel einen Schrittmotor zumindest um zwei Achsen drehbar ist, um die gesamte Arbeitsebene 6 abtasten zu können. Dadurch kann der Laserstrahl 8, 8' das pulverförmige Baumaterial 11 an den gewünschten Stellen selektiv verfestigen, die dem Querschnitt des herzustellenden Objekts 3 entsprechen. Der Laser 7 und die Umlenkvorrichtung 9 bilden zusammen eine Bestrahlungsvorrichtung. Als Laser können je nach zu verfestigendem Baumaterial CO₂-Laser, Festkörperlaser wie zum Beispiel Nd:YAG-Laser verwendet werden

Der Rahmen 1, der Träger 5, die Hubmechanik 4 und der Beschichter 10 sind in einer Prozesskammer 100 angeordnet. Die Prozesskammer 100 hat im oberen Bereich eine Öffnung zur Einleitung des Laserstrahls 8, 8'. Es ist ferner eine Steuereinheit 40 vorgesehen, über die die Lasersinteranlage in koordinierter Weise zum Durchführen des Bauprozesses und zum Durchführen des Kalibrierverfahrens gesteuert wird.

Beim Betrieb der Lasersinteranlage wird in einem ersten Schritt der Träger 5 durch die Hubmechanik 4 soweit nach unten verfahren, bis ihre obere Seite um eine Schichtdicke unterhalb der Arbeitsebene 6 liegt. Dann wird durch den Beschichter 10 eine erste Schicht des pulverförmigen Baumaterials 11 auf den Träger 5 aufgebracht und geglättet. Anschließend steuert die Steuereinheit 40 die Umlenkvorrichtung 9 derart, dass der abgelenkte Laserstrahl 8, 8' selektiv an den Stellen der Schicht des pulverförmigen Baumaterials 11 auftrifft, die verfestigt werden sollen. Dadurch wird an diesen Stellen das pulverförmige Baumaterial 11 verfestigt bzw. gesintert, so dass hier das dreidimensionale Objekt 3 entsteht.

In einem nächsten Schritt wird der Träger 5 durch die Hubmechanik 4 um die Dicke der nächsten Schicht abgesenkt. Durch den Beschichter 10 wird eine zweite Schicht des pulverförmigen Baumaterials 11 aufgetragen, geglättet und mittels des Laserstrahls 8, 8' selektiv verfestigt. Diese Schritte werden so oft durchgeführt, bis das gewünschte Objekt 3 hergestellt ist.

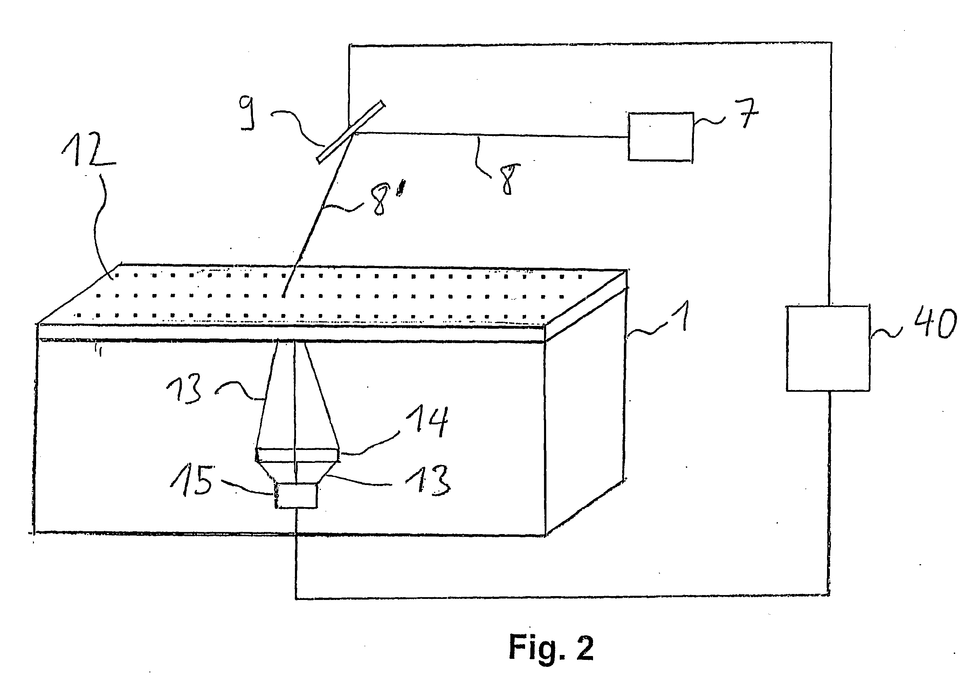

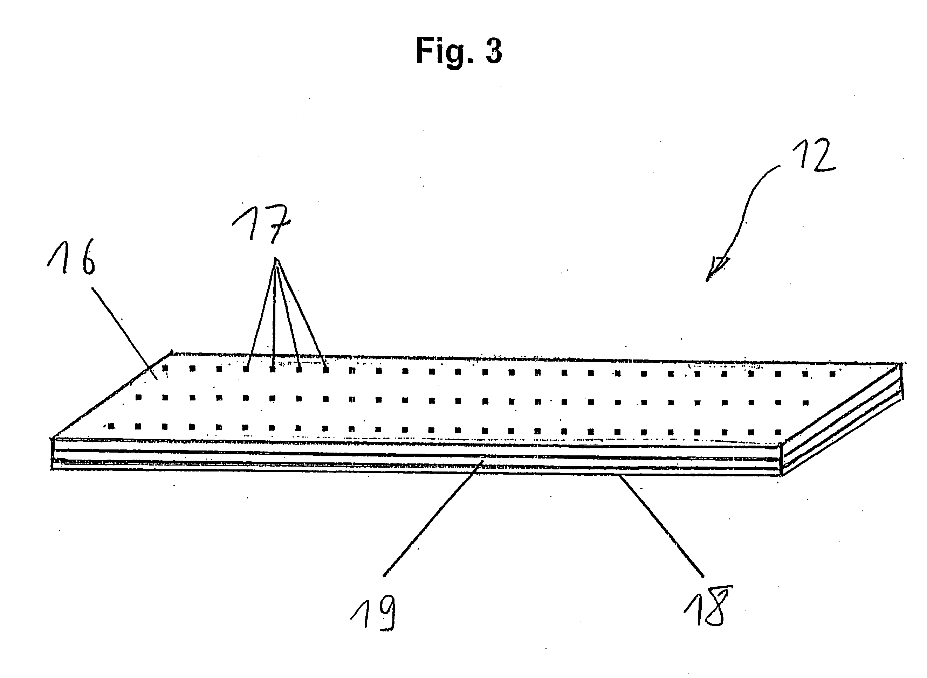

Die Fig. 2 zeigt eine schematische Ansicht eines Verfahrens und einer Vorrichtung zum Kalibrieren der Bestrahlungsvorrichtung 7, 9 der Lasersinteranlage gemäß einem Ausführungsbeispiel der vorliegenden Erfindung; und die Fig. 3 zeigt eine schematische Ansicht einer Bildwandlerplatte 12 gemäß dem Ausführungsbeispiel der vorliegenden Erfindung.

Die Vorrichtung weist die Bildwandlerplatte 12 auf, die in oder parallel zur Arbeitsebene 6 anzuordnen ist und ein detektierbares Licht 13 abgibt, wenn die Bestrahlungsvorrichtung 7, 9 vorbestimmte Positionen der Bildwandlerplatte 12 mit der energiehaltigen Strahlung 8' bestrahlt. Die Bildwandlerplatte 12 besteht vorzugsweise aus einem Substrat 18 wie zum Beispiel einem Glassubstrat 18. An der Oberseite des Glassubstrats 18 ist ein bildwandelndes Material 19 wie zum Beispiel eine dünne Schicht SiO₂ aufgebracht. Die dünne Schicht SiO₂ ist in der Lage, CO₂-Laserlicht 8' fast vollständig in sichtbares Licht oder Nahinfrarotlicht als detektierbares Licht 13 umzuwandeln. Es können auch Nd:YAG- und Faserlaser als Laser 7 verwendet werden. Das unter dem bildwandelnden Material 19 angeordnete Substrat 18 lässt das detektierbare Licht 13 durch. Die Bildwandlerplatte 12 ist nicht auf diese Ausführungsform beschränkt, da sie auch aus anderen Materialen bestehen kann. Die Bildwandlerplatte 12 hat vorzugsweise an ihrer Oberseite eine Lochmaske 16, in der sich Löcher 17 entsprechend den vorbestimmte Positionen der Bildwandlerplatte 12 befinden. Vorzugsweise sind die Löcher 17 über die gesamte Bildwandlerplatte 12 verteilt, damit die Bestrahlungsvorrichtung 7, 9 über die gesamte Arbeitsebene 6 kalibriert werden kann. Im Ausführungsbeispiel ist die Lochmaske 16 als Platte wie zum Beispiel als Stahlplatte ausgeführt, in der die Löcher 17 hinein gebohrt sind. Die Lochmaske 16 in Gestalt der Platte bietet außerdem eine mechanische Verstärkung für das Glassubstrat 18. Vorzugsweise sind die Löcher 17 zur Einfallsrichtung der energiehaltigen Strahlung 8' ausgerichtet. Die in der Fig. 3 gezeigten Dicken der Lochmaske 16, des Glassubstrats 18 und des bildwandelnden Materials 19 sind nicht maßstabsgetreu, sondern nur schematisch dargestellt.

Die Vorrichtung hat außerdem einen Lichtdetektor 15, der das von der Bildwandlerplatte 12 abgegebene detektierbare Licht 13 erfasst. Da das detektierbare Licht 13 in diesem Fall sichtbares Licht ist, kann der,Lichtdetektor 15 als CCD-Chip ausgeführt sein. Zwischen der Bildwandlerplatte 12 und dem Lichtdetektor 15 ist eine Fokussieroptik 14 angeordnet, die das detektierbare Licht 13 zu dem Lichtdetektor 15 fokussiert. Vorzugsweise sind die Bildwandlerplatte 12, der Lichtdetektor 15 und die Fokussieroptik 14 als eine Einheit ausgebildet, indem zum Beispiel ein Rahmen oder ein Gehäuse vorgesehen wird, in dem die Bildwandlerplatte 12, der Lichtdetektor 15 und die Fokussieroptik 14 als eine Einheit angebracht sind.

Der Lichtdetektor 15 ist mit einer Auswertvorrichtung 40 verbunden, die im dargestellten Ausführungsbeispiel in der Steuereinheit 40 integriert ist. Die Auswertvorrichtung 40 ist auch mit der Umlenkvorrichtung 9 verbunden und nimmt Winkelkoordinaten der Stellmotoren für den Spiegel der Umlenkvorrichtung 9 auf, die eine tatsächliche Stellung bzw. Orientierung des Spiegels angeben.

Der Betrieb der Vorrichtung ist folgendermaßen:

Im ersten Schritt werden der Lichtdetektor 15 und die Fokussieroptik 14 in den Bauraum der Anlage unterhalb der Arbeitsebene 6 angeordnet. Der Lichtdetektor 15 und die Fokussieroptik 14 können zum Beispiel auf dem Träger 5 angeordnet werden, der zuvor auf eine gewünschte Höhe verfahren wurde. Anschließend wird die Bildwandlerplatte 12 in oder parallel zur Arbeitsebene 6 in die Anlage eingelegt. Die exakte Position und die Höhe der Bildwandlerplatte 12 in der Anlage können durch nicht gezeigte Positioniervorrichtungen wie zum Beispiel Positionierstifte oder Spannvorrichtungen eingestellt werden. Falls die Bildwandlerplatte 12, der Lichtdetektor 15 und die Fokussieroptik 14 als eine Einheit ausgebildet sind, erfolgt die Anordnung dieser Elemente 12, 14, 15 in einem Schritt. Vorzugsweise wird die Bildwandlerplatte 12 zum Beispiel durch eine Heizvorrichtung der Anlage beheizt, so dass sie zum Beispiel eine Temperatur von etwa 150 °C hat, bei der eine bessere Wirkung der Bildwandlung erwartet werden kann.

Im nächsten Schritt wird die Bildwandlerplatte 12 durch die Bestrahlungsvorrichtung 7, 9 abgetastet. Sobald der Laserstrahl 8' über ein Loch 17 in der Lochmaske 16 streicht, fällt der Laserstrahl 8' auf die an der Oberseite des Glassubstrats 18 aufgebrachte SiO₂-Schicht und wird in sichtbares Licht 13 umgewandelt. Das sichtbare Licht 13 tritt durch das Glassubstrat 18 und anschließend durch die Fokussieroptik 14 hindurch und wird auf den Lichtdetektor 15 fokussiert.

Der Lichtdetektor 15 erfasst das detektierbare Licht 13 und gibt ein entsprechendes Intensitätssignal des erfassten, detektierbaren Lichts 13 an die Auswertvorrichtung 40 ab.

Während der Laserstrahl 8' über ein in der Lochmaske 16 befindliches Loch 17 streicht, erkennt die Auswertvorrichtung 40 eine ansteigende Flanke und eine abfallende Flanke des Intensitätssignal des erfassten, detektierbaren Lichts 13. Anhand der ansteigenden Flanke und der abfallenden Flanke kann die Auswertvorrichtung 40 herleiten, wann genau der Laserstrahl 8' die Mitte des Lochs 17 überstrichen hat und mit welchen Ist-Koordinaten die Umlenkvorrichtung 9 zu diesem Zeitpunkt angesteuert ist. Die Auswertvorrichtung 40 erhält von der Bestrahlungsvorrichtung 7, 9 die Ist-Koordinaten des Spiegels der Umlenkvorrichtung 9 und ermittelt daraus jene Ist-Koordinaten, bei denen der Laserstrahl 8' exakt die Mitte des Lochs 17 überstrichen hat.

In der Auswertvorrichtung 40 sind außerdem Referenzkoordinaten gespeichert, die zum Beispiel der Mitte des jeweiligen Lochs 17 entsprechen. Die Referenzkoordinaten sind bekannt, da die Bildwandlerplatte 12 in einer fest definierten Position in der Anlage angeordnet ist und die Lage der Löcher 17 innerhalb der Bildwandlerplatte 12 ebenfalls bekannt ist.

Im nächsten Schritt vergleicht die Auswertvorrichtung 40 die ermittelten Ist-Koordinaten mit den vorgegebenen Referenzkoordinaten. Auf der Grundlage der Abweichung zwischen den ermittelten Ist-Koordinaten und den Referenzkoordinaten kalibriert die Auswertvorrichtung 40 die Bestrahlungsvorrichtung 7, 9 zum Beispiel in einer aus dem Stand der Technik hinreichend bekannten Art und Weise. Zum Beispiel werden Stellgrößen der Schrittmotoren für den Spiegel der Umlenkvorrichtung 9 anhand einer Korrekturtabelle korrigiert. Die Genauigkeit der Kalibrierung ist umso größer, je kleiner die Durchmesser der Löcher 17 und je kleiner die Dicke der Bildwandlerplatte 12 sind.

Die Kalibrierung der Bestrahlungsvorrichtung 7, 9 erfolgt vollautomatisch, indem der Laserstrahl 8' die gesamte Bildwandlerplatte 12 selbsttätig abtastet, während die Auswertvorrichtung 40 daraufhin die Kalibrierung durchführt.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Die Bestrahlungsvorrichtung 7, 9 muss nicht unbedingt die gesamte Bildwandlerplatte 12 abtasten, denn es kann ausreichend sein, dass die Bildwandlerplatte 12 nur teilweise abgetastet wird.

Während im dargestellten Ausführungsbeispiel die Bildwandlerplatte 12 eine Lochmaske 16 aufweist, kann eine Abwandlung der Bildwandlerplatte 12 ein strahlungsdurchlässiges Glassubstrat 18 aufweisen, auf dem nur an den vorbestimmten Positionen der Bildwandlerplatte 12 ein bildwandelndes Material 19 aufgetragen ist. In diesem Fall kann die Lochmaske 16 weggelassen werden.

Während die Lochmaske 16 im dargestellten Ausführungsbeispiel als Stahlblech ausgeführt ist, kann die Lochmaske 16 auch durch ein Beschichtungsverfahren auf das Glassubstrat 18 aufgetragen werden.

Der Lichtdetektor 15 im dargestellten Ausführungsbeispiel ist ein CCD-Chip, wobei stattdessen auch eine Photodiode, eine Videokamera oder Detektoren auf Ge- oder Si-Basis verwendet werden kann. Während im dargestellten Ausführungsbeispiel nur ein Lichtdetektor 15 verwendet wird, können in einer Abwandlung auch mehrere Lichtdetektoren 15 verwendet werden.

Während die Auswertvorrichtung im dargestellten Ausführungsbeispiel in der Steuereinheit 40 integriert ist, kann die Auswertvorrichtung separat von der Steuereinheit 40 und auch separat von der Anlage selbst vorgesehen sein.

Die Kalibrierung der Bestrahlungsvorrichtung kann in der Lasersinteranlage oder separat außerhalb erfolgen.

Das erfindungsgemäße Verfahren ist nicht nur auf Lasersintern anwendbar, sondern auf alle generativen Verfahren, bei denen ein pulverförmiger oder flüssiger Werkstoff verwendet wird, welcher durch energiehaltige Strahlung verfestigt wird.

## Patentansprüche

1. Verfahren zum Kalibrieren einer Bestrahlungsvorrichtung (7, 9) einer Anlage zum generativen Herstellen eines dreidimensionalen Objekts (3), wobei die Anlage ein pulverförmiges oder flüssiges Baumaterial (11) auf einen Träger (5) der Anlage oder einer zuvor aufgetragenen Schicht schichtweise aufträgt, wobei die aufgetragene Schicht eine Arbeitsebene (6) definiert, und das Baumaterial (11) durch die Bestrahlungsvorrichtung (7, 9) mit energiehaltiger Strahlung (8') an Stellen bestrahlt, die dem Objekt (3) entsprechen, um das Baumaterial (11) an diesen Stellen zu verfestigen, wobei das Verfahren die folgenden Schritte aufweist:
Anordnen einer Bildwandlerplatte (12) in oder parallel zur Arbeitsebene (6), wobei die Bildwandlerplatte (12) detektierbares Licht (13) abgibt, wenn die Bestrahlungsvorrichtung (7, 9) vorbestimmte Positionen der Bildwandlerplatte (12) mit der energiehaltigen Strahlung (8') bestrahlt;
Abtasten der Bildwandlerplatte (12) durch die Bestrahlungsvorrichtung (7, 9);
Erfassen des detektierbaren Lichts (13) durch einen Lichtdetektor (15);
Ermitteln von Koordinaten der Bestrahlungsvorrichtung (7, 9), wenn das detektierbare Licht (13) erfasst wird;
Vergleichen der ermittelten Koordinaten mit vorgegebenen Referenzkoordinaten; und
Kalibrieren der Bestrahlungsvorrichtung (7, 9) auf der Grundlage einer Abweichung zwischen den ermittelten Koordinaten und den Referenzkoordinaten,
**dadurch gekennzeichnet, dass**
die Bildwandlerplatte (12) CO₂- oder Festkörperlaserlicht in sichtbares Licht oder Nahinfrarotlicht (13) umwandeln kann.

2. Verfahren gemäß Anspruch 1, wobei die Bildwandlerplatte (12) ein Substrat (18), auf dem ein bildwandelndes Material (19) vorgesehen ist, und eine Lochmaske (16) aufweist, in der sich Löcher (17) entsprechend den vorbestimmte Positionen der Bildwandlerplatte (12) befinden, wobei das Substrat (18) das detektierbare Licht (13) durchlässt.

3. Verfahren gemäß Anspruch 2, wobei die Löcher (17) zur Einfallsrichtung der energiehaltigen Strahlung (8') ausgerichtet sind.

4. Verfahren gemäß einem der vorherigen Ansprüche, wobei die Bildwandlerplatte ein Substrat aufweist, auf dem nur an den vorbestimmten Positionen der Bildwandlerplatte ein bildwandelndes Material aufgetragen ist, wobei das Substrat das detektierbare Licht durchlässt.

5. Verfahren gemäß einem der vorherigen Ansprüche, wobei der Lichtdetektor (15) unter der Bildwandlerplatte (12) angeordnet wird.

6. Verfahren gemäß einem der vorherigen Ansprüche, wobei der Lichtdetektor (15) ein CCD-Chip, eine Photodiode oder eine Videokamera ist.

7. Verfahren gemäß einem der vorherigen Ansprüche, wobei eine Fokussieroptik (14), die das detektierbare Licht (13) zu dem Lichtdetektor (15) fokussiert, zwischen der Bildwandlerplatte (12) und dem Lichtdetektor (15) angeordnet wird.

8. Verfahren gemäß einem der vorherigen Ansprüche,
wobei die Bestrahlungsvorrichtung (7, 9) eine Strahlungsquelle (7) und eine Umlenkvorrichtung (9) aufweist, die die von der Strahlungsquelle (7) ausgesendete energiehaltige Strahlung (8') zu beliebigen Positionen in der Arbeitsebene (6) umlenkt, und
die Umlenkvorrichtung (9) auf der Grundlage der Abweichung zwischen den ermittelten Koordinaten und den Referenzkoordinaten kalibriert wird.

9. Verfahren gemäß einem der vorherigen Ansprüche, wobei der Festkörperlaser ein Nd:YAG-Laser oder ein Faserlaser ist.

10. Vorrichtung zum Durchführen des Verfahrens gemäß einem der vorherigen Ansprüche, mit:
der Bildwandlerplatte (12), die in oder parallel zur Arbeitsebene (6) anzuordnen ist und ein detektierbares Licht (13) abgibt, wenn die Bestrahlungsvorrichtung (7, 9) vorbestimmte Positionen der Bildwandlerplatte (12) mit energiehaltiger Strahlung (8') bestrahlt;
dem Lichtdetektor (15), der das von der Bildwandlerplatte (12) abgegebene detektierbare Licht (13) erfasst; und
der Auswertvorrichtung (40), die Koordinaten der Bestrahlungsvorrichtung (7, 9) ermittelt, wenn das detektierbare Licht (13) erfasst wird, die ermittelten Koordinaten mit vorgegebenen Referenzkoordinaten vergleicht und die Bestrahlungsvorrichtung (7, 9) auf der Grundlage der Abweichung zwischen den ermittelten Koordinaten und den Referenzkoordinaten kalibriert,
**dadurch gekennzeichnet, dass**
die Bildwandlerplatte (12) CO₂- oder Festkörperlaserlicht in sichtbares Licht oder Nahinfrarotlicht (13) umwandeln kann.

## Claims

1. A method of calibrating an irradiation device (7, 9) of an apparatus for generatively manufacturing a three-dimensional object (3), wherein the apparatus layerwise applies a powdery or liquid building material (11) onto a support (5) of the apparatus or a previously applied layer, the applied layer defining a working plane (6), and irradiates the building material (11) by the irradiation device (7, 9) with energetic radiation (8') at locations corresponding to the object (3) so as to solidify the building material (11) at these locations, the method comprising the following steps: arranging an image converter plate (12) in, or in parallel to, the working plane (6), wherein the image converter plate (12) outputs detectable light (13) when the irradiation device (12) irradiates predetermined positions of the image converter plate (12) with the energetic radiation (8'); scanning the image converter plate (12) by the irradiation device (7, 9); detecting the detectable light (13) by a light detector (15); determining coordinates of the irradiation device (7, 9) when the detectable light (13) is detected; comparing the determined coordinates with predetermined reference coordinates; and calibrating the irradiation device (7, 9) on the basis of a deviation between the determined coordinates and the reference coordinates; **characterized in that** the image converter plate (12) can convert CO2 laser light, or solid state laser light into visible light or near-infrared light.

2. The method according to claim 1, wherein the image converter plate (12) comprises a substrate (18) on which an image converting material (19) is provided and an aperture mask (16) in which apertures (17) are located corresponding to the predetermined positions of the image converter plate (12), wherein the substrate (18) permits detectable light (13) to pass through.

3. The method according to claim 2, wherein the apertures (17) are aligned in the impact direction of the energetic radiation (8').

4. The method according to one of the preceding claims, wherein the image converter plate comprises a substrate, on which an image converting material is applied only at the predetermined positions of the image converter plate, wherein the substrate permits detectable light to pass through.

5. The method according to one of the preceding claims, wherein the light detector (15) is arranged below the image converter plate (12).

6. The method according to one of the preceding claims, wherein the light detector (15) is a CCD-chip, a photodiode or a video camera.

7. The method according to one of the preceding claims, wherein a focusing optics (14), which focuses the detectable light (13) to the light detector (15), is arranged between the image converter plate and the light detector (15).

8. The method according to one of the preceding claims, wherein the irradiation device (7, 9) comprises a radiation source (7) and a deflection device (9), which deflects the energetic radiation (8') emitted from the radiation source (7) to arbitrary positions in the working plane (6), and the deflection device (9) is calibrated on the basis of the deviation between the determined coordinates and the reference coordinates.

9. The method according to one of the preceding claims, wherein the solid state laser is an Nd:YAG laser or a fibre laser.

10. A device for performing the method according to one of the preceding claims, the device comprising: the image converter plate (12), which is to be arranged in or in parallel to the working plane (6) and outputs detectable light (13), when the irradiation device (7, 9) irradiates predetermined positions of the image converter plate (12) with energetic radiation (8'); the light detector (15), which detects the detectable light (13) output from the image converter plate (12); and the evaluation device (40), which determines the coordinates of the irradiation device (7, 9), when the detectable light (13) is detected, compares the determined coordinates with predetermined reference coordinates, and calibrates the irradiation device (7, 9) on the basis of the deviation between the determined coordinates and the reference coordinates; **characterized in that** the image converter plate (12) can convert CO₂ laser light or solid state laser light into visible light or near-infrared light.

## Revendications

1. Procédé de calibrage d'un dispositif d'irradiation (7, 9) d'un équipement destiné à la fabrication générative d'un objet tridimensionnel (3), l'équipement appliquant couche par couche un matériau de construction (11) pulvérulent ou liquide sur un support (5) de l'équipement ou sur une couche appliquée précédemment, la couche appliquée définissant un plan de travail (6) et le matériau de construction (11) étant irradié par le dispositif d'irradiation (7, 9) avec un rayonnement énergétique (8') aux endroits qui correspondent à l'objet (3) afin de consolider le matériau de construction (11) à ces endroits, le procédé présentant les étapes suivantes :
disposition d'une plaque de conversion d'image (12) dans le plan de travail (6) ou parallèlement à celui-ci, la plaque de conversion d'image (12) délivrant une lumière détectable (13) lorsque le dispositif d'irradiation (7, 9) irradie des positions prédéfinies de la plaque de conversion d'image (12) avec le rayonnement énergétique (8') ;
balayage de la plaque de conversion d'image (12) par le dispositif d'irradiation (7, 9) ;
détection de la lumière détectable (13) par un détecteur de lumière (15) ;
détermination des coordonnées du dispositif d'irradiation (7, 9) lorsque la lumière détectable (13) est détectée ;
comparaison des coordonnées déterminées avec des coordonnées de référence prédéfinies ; et
calibrage du dispositif d'irradiation (7, 9) en se basant sur un écart entre les coordonnées déterminées et les coordonnées de référence ;
**caractérisé en ce que** la plaque de conversion d'image (12) peut convertir de la lumière de laser à CO₂ ou à corps solide en lumière visible ou en lumière en proche infrarouge (13).

2. Procédé selon la revendication 1, selon lequel la plaque de conversion d'image (12) présente un substrat (18) sur lequel est prévu un matériau de conversion d'image (19) ainsi qu'un masque perforé (16) dans lequel se trouvent des trous (17) correspondant aux positions prédéfinies de la plaque de conversion d'image (12), le substrat (18) laissant passer la lumière détectable (13).

3. Procédé selon la revendication 2, selon lequel les trous (17) sont orientés vers le sens de l'incidence du rayonnement énergétique (8').

4. Procédé selon l'une des revendications précédentes, selon lequel la plaque de conversion d'image présente un substrat sur lequel un matériau de conversion d'image n'est appliqué qu'aux positions prédéfinies de la plaque de conversion d'image, le substrat laissant passer la lumière détectable.

5. Procédé selon l'une des revendications précédentes, selon lequel le détecteur de lumière (15) est disposé sous la plaque de conversion d'image (12).

6. Procédé selon l'une des revendications précédentes, selon lequel le détecteur de lumière (15) est une puce CCD, une photodiode ou une caméra vidéo.

7. Procédé selon l'une des revendications précédentes, selon lequel une optique de concentration (14) qui concentre la lumière détectable (13) vers le détecteur de lumière (15) est disposée entre la plaque de conversion d'image (12) et le détecteur de lumière (15).

8. Procédé selon l'une des revendications précédentes,
selon lequel le dispositif d'irradiation (7, 9) présente une source de rayonnement (7) et un dispositif de déviation (9) qui dévie le rayonnement énergétique (8') émis par la source de rayonnement (7) vers des positions quelconques dans le plan de travail (6) et
le dispositif de déviation (9) est calibré en se basant sur l'écart entre les coordonnées déterminées et les coordonnées de référence.

9. Procédé selon l'une des revendications précédentes, selon lequel le laser à corps solide est un laser Nd:YAG ou un laser à fibre.

10. Dispositif pour mettre en oeuvre le procédé selon l'une des revendications précédentes, comprenant :
la plaque de conversion d'image (12) qui est à disposer dans un plan de travail (6) ou parallèlement à celui-ci et qui délivre une lumière détectable (13) lorsque le dispositif d'irradiation (7, 9) irradie des positions prédéfinies de la plaque de conversion d'image (12) avec le rayonnement énergétique (8') ;
le détecteur de lumière (15) qui détecte la lumière détectable (13) délivrée par la plaque de conversion d'image (12) ;
le dispositif d'interprétation (40) qui détermine les coordonnées du dispositif d'irradiation (7, 9) lorsque la lumière détectable (13) est détectée, compare les coordonnées déterminées avec des coordonnées de référence prédéfinies et calibre le dispositif d'irradiation (7, 9) en se basant sur un écart entre les coordonnées déterminées et les coordonnées de référence ;
**caractérisé en ce que** la plaque de conversion d'image (12) peut convertir de la lumière de laser à CO₂ ou à corps solide en lumière visible ou en lumière en proche infrarouge (13).
